Europäisches Patentamt

European Patent Office

Office européen des brevets

(11) Veröffentlichungsnummer: **0 157 761**
A2

(12) **EUROPÄISCHE PATENTANMELDUNG**

(21) Anmeldenummer: 85890089.7

(22) Anmeldetag: 03.04.85

(51) Int. Cl.⁴: **B 60 C 9/00,** B 60 C 9/11

(30) Priorität: 06.04.84 AT 1181/84
26.03.85 AT 897/85

(43) Veröffentlichungstag der Anmeldung: 09.10.85
Patentblatt 85/41

(84) Benannte Vertragsstaaten: **DE FR GB IT**

(71) Anmelder: **LIM Kunststoff-Technologie Gesellschaft m.b.H., A-2421 Kittsee (AT)**

(72) Erfinder: **Schmidt, Oskar, Schlossmühlgasse 22, A-2460 Bruck/Leitha (AT)**
Erfinder: **Kubica, Wladislaw, Hauergasse 12/1, A-2410 Hainburg/Donau (AT)**

(74) Vertreter: **Rippel, Andreas,-Dipl.-Ing., Maxingstrasse 34, A-1130 Wien (AT)**

(54) **Fahrzeugreifen aus giess- bzw. spritzbaren Elastomeren.**

(57) Ein Fahrzeugreifen besitzt einen Korpus 1 mit einer Lauffläche 2. Unterhalb der Lauffläche 2 verläuft ein Gurt 3 und quer dazu eine Radialarmierung 4, die an Wulstringen 5 verankert ist.

Zur Abstandshalterung gegenüber der Innenfläche des Fahrzeugreifens ist ein Gestrick 6 angeordnet, das nach allen Richtungen hin flexibel ist.

EP 0 157 761 A2

- 1 -

## Fahrzeugreifen aus gieß- bzw. spritzbaren Elastomeren

Die Erfindung bezieht sich auf einen Fahrzeugreifen aus gieß- bzw. spritzbaren Elastomeren, mit einer an Wulstringen verankerten Radialarmierung und/oder einem Gürtel, die bzw. der dem Reifeninneren zu auf Abstandshaltern aufliegt.

Zur Armierung von Fahrzeugreifen aus Gummi wird vielfach Kord verwendet, der quer zum Reifentorus von einem Wulstring zum anderen verläuft und an diesen Wulstringen verankert ist. Überdies wird auch noch ein umfänglich verlaufender Gurt angeordnet. Wulstringe, Radialarmierung und Gurt werden durch vulkanisierten Gummi festgehalten, wobei die Herstellung derart erfolgt, daß vorerst unvulkanisierte Elemente miteinander verklebt und diese Elemente durch Vulkanisieren zu einer Einheit verbunden werden. Bei Gummireifen ist die Positionierung der Armierung daher nicht schwierig.

Bei Reifen aus gieß- oder spritzbaren Elastomeren werden teilweise oder zur Gänze von den Gummireifen her bekannte Armierungen verwendet. Zum Unterschied von Gummireifen stößt jedoch hier die Positionierung der Armierung auf Schwierigkeiten, weil die Armierung im Hohlraum der Form in einem vorgegebenen Abstand vom Formkern festzulegen ist. Es wurde dazu z.B. schon vorgeschlagen, den Formkern mit Rippen zu versehen, bzw. die Radialarmierung selbst mit Vorsprüngen auszustatten. Die Herstellung solcher Reifen ist verhältnismässig kompliziert und überdies besteht die Gefahr, daß der Reifen bereichsweise inhomogen wird.

Bei manchen mechanisierten Feldarbeiten ist es wichtig, daß die Bereifung der Traktoren einen möglichst geringen spezifischen Bodendruck ausübt, damit der Boden nicht zerdrückt wird. Um dies zu erreichen, wurden bisher Gummireifen mit der bekannten, an den Wulstringen verankerten Radialarmierung verwendet, wobei jedoch die Breite der Reifen wesentlich vergrößert, meist fast verdoppelt wurde und zusätzlich der Luftdruck ebenfalls wesentlich herabgesetzt wurde. Es konnte hiedurch zwar der spezifische Bodendruck vermindert werden, durch die Armierung der Seitenwände bis zur Verankerung an den Wulstringen verbleibt jedoch weiter eine Steifigkeit dieser Seitenwände, wodurch ein negativer Einfluß auf den Bodendruck ausgeübt wird.

Die Erfindung hat es sich zum Ziel gesetzt, einen Fahrzeugreifen der eingangs genannten Art zu schaffen, der auf einfachere Weise als bisher herzustellen ist und bei dem überdies eine weitgehend homogene Zusammensetzung des Reifenmaterials gegeben ist, wobei bei Anwendung der Erfindung auf Traktorenreifen ein geringer spezifischer Bodendruck vorhanden sein soll. Erreicht wird dieses Ziel dadurch, daß als Abstandshalter für die Radialarmierung bzw. den Gürtel ein nach allen Richtungen flexibles Netzwerk angeordnet ist. Bei der Herstellung eines erfindungsgemäßen Reifens kann das flexible Netzwerk einfach auf den Formkern aufgezogen werden, worauf die Armierung angebracht wird. Die Armierung, insbesondere der Gurt kann aber auch schon vor dem Aufziehen des Netzwerkes auf diesem angebracht werden. Der Raum zwischen den einzelnen Elementen des Netzwerkes wird vom Reifenmaterial ausgefüllt, sodaß eine weitgehende Homogenität erreicht ist.

Bei einer besonders zweckmäßigen Ausführungsform der Erfindung besteht das Netzwerk aus einem Gestrick. Es ist zwar schon bekannt, bei der Herstellung eines Reifens ein Gestrick zu verwenden, bei den bekannten Reifen soll jedoch dieses Gestrick selbst als Armierung dienen.

Eine Halterung der Ränder des Netzwerkes kann dadurch leicht erreicht werden, daß durch die Ränder des Netzwerkes eine umfänglich verlaufende Schnur gezogen ist.

Um bei Traktorenreifen einen geringen spezifischen Bodendruck zu erreichen, wird auf die Armierung der Seitenwände verzichtet und nur ein Gurt verwendet, der die Beanspruchung aus Luftdruck und Tangentialkräften übernimmt. Die Anordnung eines Gurtes unter Weglassung der Radialarmierung wird erfindungsgemäß dadurch möglich, daß der Gurt direkt auf dem Netzwerk aufliegt und mit diesem punktweise verbunden, z.B. verschweißt ist, wobei das Netzwerk bis in die armie-

rungslosen Seitenwände des Reifens reicht.

Bei einer zweckmässigen Ausführungsform der Erfindung besteht der Gurt aus einzelnen parallel zueinander verlaufenden Kordabschnitten, die schräg zur Umfangsrichtung des Reifens verlaufen. Dabei weist vorteilhaft der Gurt mindestens zwei Lagen auf, die übereinander angeordnet sind, wobei der Verlauf der Kordabschnitte in einer Lage spiegelbildlich symmetrisch zum Verlauf der Kordabschnitte in der nächsten Lage ist.

Um zu vermeiden, daß einzelne Stränge der Radialarmierung in Vertiefungen des Netzwerkes zu liegen kommen, ist es nach einem weiteren Merkmal der Erfindung vorteilhaft, wenn die Rippen des Gestrickes schräg zum Umfang des Reifens verlaufen.

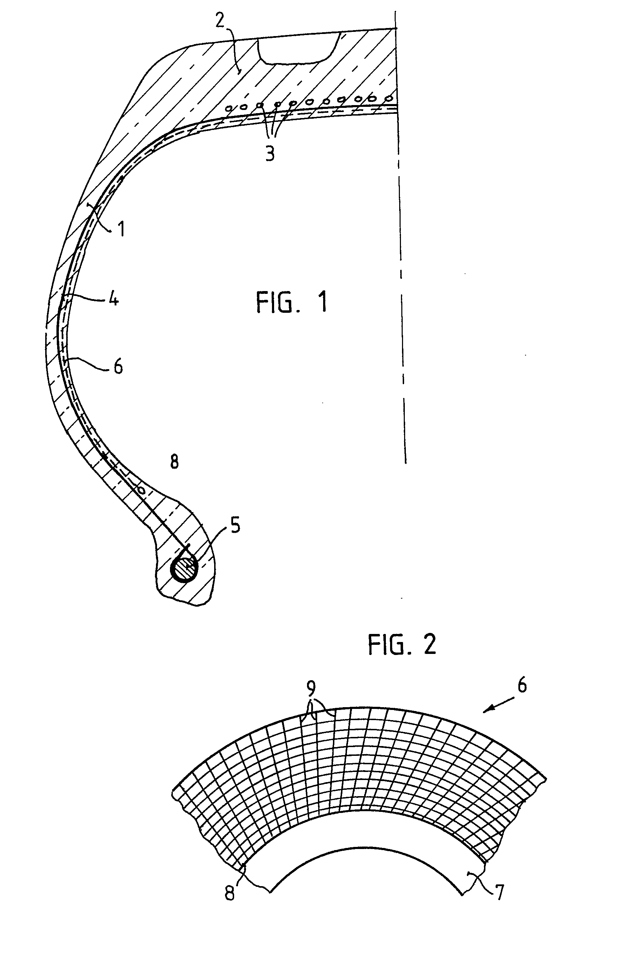

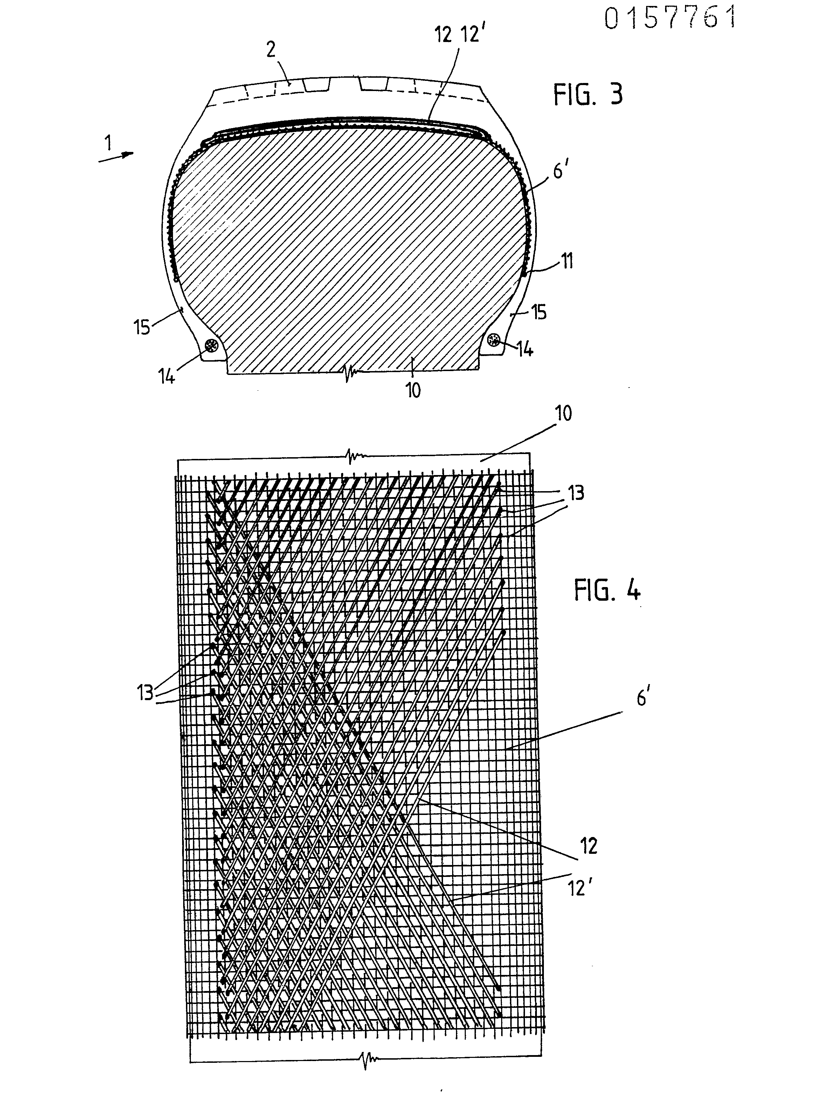

Nachstehend ist die Erfindung an Hand zweier in den Zeichnungen dargestellten Ausführungsbeispielen näher beschrieben, ohne jedoch auf diese Beispiele beschränkt zu sein. Dabei zeigen: Fig. 1 einen Querschnitt durch einen erfindungsgemäßen Fahrzeugreifen mit einem Gurt und einer Radialarmierung, Fig. 2 schematisch das auf einen Formkern aufgezogene Netzwerk nach Fig. 1, Fig. 3 den Querschnitt durch einen auf einen Kern aufgezogenen Traktorreifen und Fig. 4 eine Draufsicht auf das Netzwerk und den Gürtel nach Fig. 3.

Gemäß Fig. 1 besitzt ein Fahrzeugreifen einen Korpus 1 mit einer Lauffläche 2. Unterhalb der Lauffläche 2 verläuft ein Gurt 3 und quer dazu eine Radialarmierung 4, die an Wulstringen 5 verankert ist.

Zur Abstandshalterung gegenüber der Innenfläche des Fahrzeugreifens ist ein Gestrick 6 angeordnet, das nach allen Richtungen hin flexibel ist.

Bei der Herstellung des Reifens wird das flexible Gestrick 6 auf einen Formkern 7 (Fig. 2) aufgezogen und durch Schnüre 8, die durch die Ränder des Gestrickes 6 gezogen sind, auf dem Formkern 7 festgehalten. Die Schnüre 8 werden hiezu, ähnlich wie beim Verschließen der Öffnung eines Beutels, zusammengezogen, bis das Gestrick 6 am Formkern 7 anliegt. Die Schnüre 8 können entweder durch die letzten Maschen des Gestrickes oder durch einen umgeschlagenen und angehefteten Rand desselben gezogen sein.

0157761

Beim Zusammenziehen der Schnüre 8 werden die Ränder des Gestrickes 6 derart gegeneinander verdreht, daß die Rippen 9 des Gestrickes 6, wie aus Fig. 2 ersichtlich ist, schräg zum Umfang des Formkernes 7 bzw. des herzustellenden Fahrzeugreifens verlaufen. Dadurch wird erreicht, daß die anschließend aufgebrachte Radialarmierung 4 in Abständen auf Rippen 9 aufliegt, sodaß nicht einzelne Stränge der Radialarmierung zwischen zwei Rippen 9 und damit tiefer als die benachbarten Stränge zu liegen kommen.

Nach Aufbringen der Radialarmierung 4 und eventuell des Gurtes 3 wird der Korpus 1 bzw. die Lauffläche 2 in üblicher Weise gespritzt bzw. gegossen. Hiezu können z.B. die in den österreichischen Patenten Nr. 339.755, 339.756 und 343.499 beschriebenen Vorrichtungen verwendet werden.

Zufolge des erfindungsgemäß angeordneten Netzwerkes bzw. Gestrickes wird die Radialarmierung 4 überall in entsprechendem Abstand von der Innenfläche des Reifens gehalten. Der eingebrachte Elastomer dringt in die Zwischenräume des Netzwerkes ein und es entsteht dadurch ein homogener Reifenkorpus.

Gemäß den Fig. 3 und 4 wurde das Gestrick 6' auf einen Formkern 10 aufgelegt und sowie beim Ausführungsbeispiel nach den Fig. 1 und 2 durch einen Randfaden bzw. eine Schnur 11 zusammengezogen. Wie weit das Gestrick 6' den Formkern 10 umfassen soll, kann im Einzelfall entschieden werden, es muss jedenfalls so weit sein, daß eine sichere Positionierung am Formkern 10 erreicht wird. Auf das Gestrick 6' sind in zwei Lagen übereinander einzelne Kordabschnitte 12 und 12' aufgelegt und mit dem Gestrick 6' punktweise verbunden, insbesondere an den Enden 13 verklebt. In den einzelnen Lagen verlaufen die Kordabschnitte 12,12' im Wesentlichen parallel zueinander, die Kordabschnitte 12 und 12' kreuzen jedoch einander und zwar derart, daß der Verlauf der Kordabschnitte 12 spiegelbildlich symmetrisch zum Verlauf der Kordabschnitte 12' ist.

- 5 -

Der Reifen besitzt Wulstringe 14, seine Seitenwände 15 sind jedoch armierungslos. Dadurch ist es im Verein mit einer verhältnismäßig großen Breite des Reifens möglich, den spezifischen Bodendruck verhältnismäßig gering zu halten, sodaß er als Traktorreifen besonders geeignet ist.

Im Rahmen der Erfindung sind zahlreiche Abänderungen möglich. So wäre es z.B. bei der Ausführungsform nach den Fig. 3 und 4 möglich, die Maschenweite des Netzwerkes bzw. Gestrickes 6' in Richtung zu den Gestrickrändern stufenweise bzw. kontinuierlich zu vergrößern. Auch könnte der aus den Kordabschnitte 12, 12' bestehende Gurt in einer Vorrichtung mit kernähnlichem Torus auf das Gestrick 6' aufgebracht und als einbaufähige Einlage zum späteren Aufziehen auf einen Formkern vorgefertigt werden. Der Gurt selbst könnte auch auf andere Weise als aus einzelnen Kordabschnitten zusammengesetzt sein.

LIM Kunststoff Technologie
Gesellschaft m.b.H.

durch:

P a t e n t a n s p r ü c h e

1. Fahrzeugreifen aus gieß- bzw. spritzbaren Elastomeren, mit einer an Wulstringen verankerten Radialarmierung und/oder einem Gurt, die bzw. der dem Reifeninneren zu auf Abstandshaltern aufliegt, dadurch gekennzeichnet, daß als Abstandshalter für die Radialarmierung bzw. den Gurt ein nach allen Richtungen flexibles Netzwerk (6,6') angeordnet ist.

2. Fahrzeugreifen nach Anspruch 1, dadurch gekennzeichnet, daß das Netzwerk aus einem Gestrick (6,6') besteht.

3. Fahrzeugreifen nach Anspruch 1 oder 2, dadurch gekennzeichnet, daß durch die Ränder des Netzwerkes ((6,6') eine umfänglich verlaufende Schnur (8, 11) gezogen ist.

4. Fahrzeugreifen nach einem der Ansprüche 1 bis 3, dadurch gekennzeichnet, daß der Gurt (12, 12') direkt auf dem Netzwerk (6') aufliegt und mit diesem punktweise verbunden, z.B. verschweißt ist, wobei das Netzwerk bis in die armierungslosen Seitenwände (15) des Reifens reicht.

5. Fahrzeugreifen nach Anspruch 4, dadurch gekennzeichnet, daß der Gurt aus einzelnen parallel zueinander verlaufenden Kordabschnitten (12, 12')besteht, die schräg zur Umfangsrichtung des Reifens verlaufen.

6. Fahrzeugreifen nach Anspruch 5, dadurch gekennzeichnet, daß der Gurt mindestens zwei Lagen aufweist, die übereinander angeordnet sind, wobei der Verlauf der Kordabschnitte (12) in einer Lage spiegelbildlich symmetrisch zum Verlauf der Kordabschnitte (12') in der nächsten Lage ist.

7. Fahrzeugreifen nach Anspruch 2, dadurch gekennzeichnet, daß die Rippen (9) des Gestrickes (6) schräg zum Umfang des Reifens verlaufen.

LIM Kunststoff Technologie
Gesellschaft m.b.H.
durch:

FIG. 1

FIG. 2

0157761

FIG. 3

FIG. 4